# EUROPÄISCHE PATENTSCHRIFT

(11) **EP 1 195 589 B1**
(45) Veröffentlichungstag und Bekanntmachung des Hinweises auf die Patenterteilung: **27.10.2004**
(21) Anmeldenummer: 01126676.4
(22) Anmeldetag: 24.07.1998
(51) Int. Cl.: G01L 7/04

(54) **Verfahren zur Herstellung eines Messsystems für ein Druckmessgerät**
Method of manufacturing a measuring system for a pressure sensing device
Procédé de fabrication d'un système de mesure pour un capteur de pression

(43) Veröffentlichungstag der Anmeldung: 10.04.2002
(62) Teilanmeldung aus: 98113938.9
(73) Patentinhaber: WIKA ALEXANDER WIEGAND GmbH & CO., D-63911 Klingenberg (DE)
(72) Erfinder: Klein, Kurt, 63911 Klingenberg (DE); Wahl, Detlef, 63906 Erlenbach (DE); Schliessmann, Heiko, 63863 Eschau (DE); Meisenzahl, Burkard, 63927 Bürgstadt (DE); Berninger, Helmut, 63785 Obernburg (DE); Friebe, Bernd, 61267 Neu-Anspach (DE)
(74) Vertreter: Leson, Thomas Johannes Alois, Dipl.-Ing.

(56) Entgegenhaltungen:
- DE-A- 2 354 473
- DE-U- 9 215 178
- US-A- 5 640 992

## Beschreibung

Die Erfindung bezieht sich auf ein Verfahren zur Herstellung eines Messsystems für ein Druckmessgerät gemäß dem Oberbegriff von Patentanspruch 1.

Ein Verfahren mit den Merkmalen des Oberbegriffs von Patentanspruch 1 und das darin definierte Messsystem sind bekannt. Das bekannte Messsystem kann mit einem auf die vordere Platine aufgesetzten Zifferblatt und einem auf den Zeigerzapfen aufgesetzten Zeiger versehen sein. Die Einheit aus dem Messsystem, dem Zifferblatt und dem Zeiger kann in einem Gehäuse angeordnet sein, das vor dem Zifferblatt eine Sichtscheibe trägt, so dass diese Elemente dann ein Druckmessgerät bilden.

Bei dem bekannten Messsystem besteht der Federträger üblicherweise aus einem quaderförmigen, metallischen Bauteil, an dem einerseits ein durchbohrter Geräteanschluss angeformt und andererseits eine Nut ausgebildet ist. Der häufig als Gewindezapfen ausgebildete Geräteanschluss dient zum Anschließen des Druckmessgeräts an ein System, in dem der Messdruck, d.h. der zu messende Druck, herrscht und steht in Verbindung mit der Nut. Das eine Ende der Rohrfeder ist in die Nut eingesetzt und dort mit dem Federträger verlötet. Mit dem anderen Ende der Rohrfeder ist das Federendstück derart verlötet, dass das andere Ende druckdicht geschlossen ist. Der Messdruck gelangt durch den Geräteanschluss in die gekrümmte Rohrfeder, die in Abhängigkeit von der Höhe des Messdrucks aufgeweitet wird, so dass ihr anderes Ende und somit das Federendstück ausgelenkt werden. Das Federendstück ist bei dem bekannten Messsystem mittels einer Zugstange gelenkig mit dem Hebelabschnitt des Zahnsegmentes verbunden, so dass die Auslenkung des Federendstücks in eine Drehung der Zeigerwelle und somit des Zeigers umgewandelt wird. Am Zifferblatt zeigt der Zeiger den herrschenden Messdruck an.

Im Zuge der Herstellung des bekannten Messsystems wird das eine Ende der Rohrfeder am Federträger angelötet und wird das Federendstück mit dem anderen Ende der Rohrfeder verlötet. Parallel dazu wird das Zeigerwerk montiert. Das montierte Zeigerwerk wird dann am Federträger befestigt. Dies geschieht üblicherweise dadurch, dass die untere Platine des Zeigerwerks am Federträger angeschraubt wird. Dabei muss darauf geachtet werden, dass die Rohrfeder und das Federendstück möglichst genau ihre Sollstellungen bezüglich des Zeigerwerks, insbesondere bezüglich der Drehachse des Zahnsegmentes, einnehmen, da von der Genauigkeit, mit der diese Sollstellungen eingehalten werden, die Genauigkeit der Druckmessung und der Druckanzeige beeinflusst wird. Nachdem das Zeigerwerk am Federträger befestigt worden ist, wird die Zugstange gelenkig sowohl mit dem Federendstück als auch mit dem Hebelabschnitt des Zahnsegmentes verbunden, damit die Auslenkung des Federendstücks zum Hebelabschnitt übertragen werden kann.

Aufgrund der vorstehend beschriebenen Verfahrensschritte bei der Herstellung des bekannten Messsystems ist diese Herstellung vergleichsweise arbeitsintensiv und aufwendig. Zudem ist nicht gewährleistet, dass die Rohrfeder und das Federendstück ihre geometrischen Sollstellungen bezüglich des Zeigerwerks einnehmen, was, je nach den Genauigkeitsanforderungen an das Messsystem, eine mehr oder weniger aufwendige Justierung des Messsystems notwendig machen kann.

Ein Verfahren mit den Merkmalen des Oberbegriffs von Patentanspruch 1 sind auch durch die Veröffentlichung DE 23 54 473 C2 bekannt. Bei dem durch diese Veröffentlichung bekannten Messsystem ist der Federträger entweder als mit der oberen Platine verschraubtes Metallstück, in das das eine Ende der Rohrfeder luftdicht eingespannt ist, oder als Blechlappen ausgebildet, der mit der oberen Platine einstückig ausgebildet oder an dieser angeschraubt ist. Wenn der Federträger als Blechlappen ausgebildet ist, wird im Zuge der Herstellung dieses bekannten Messsystems das eine Ende der Rohrfeder auf den Blechlappen geschoben. Außerdem wird ein der Zufuhr des Messdrucks dienendes Röhrchen in das eine Ende der Rohrfeder eingeschoben. Der Blechlappen, das Röhrchen und das eine Ende der Rohrfeder werden schließlich miteinander verschweißt. Wenn bei diesem bekannten Messsystem der Federträger an der Platine des Zeigerwerks angeschraubt wird, sind die Herstellung des Messsystems und seine Justierung ähnlich aufwendig wie bei dem zuvor beschriebenen bekannten Messsystem. Wenn der den Federträger bildende Blechlappen einstückig mit der oberen Platine ausgebildet ist, sind zwar das Verbinden des einen Endes der Rohrfeder mit dem Federträger und die Herstellung einer starren Verbindung dieses Endes der Rohrfeder mit dem Zeigerwerk zu einem Schritt zusammengefasst. Das Federendstück nimmt jedoch bezüglich des Zeigerwerks eine nicht hinreichend genau definierte Stellung ein, so dass die Genauigkeit der Druckanzeige gering ist bzw. eine Erhöhung der Anzeigegenauigkeit nur durch erhöhten Justierungsaufwand erzielt werden kann.

Der Erfindung liegt die Aufgabe zugrunde, das gattungsgemäße Verfahren dahingehend weiterzubilden, dass die Herstellung des Messsystems vereinfacht ist und mit geringem Herstellungsaufwand ein vergleichsweise genau anzeigendes Messsystem geschaffen wird.

Diese Aufgabe wird erfindungsgemäß durch das Verfahren gemäß Patentanspruch 1 gelöst. Gemäß dem erfindungsgemäßen Verfahren ist vorgesehen, dass das Federendstück als mit einer der beiden Platinen fest verbundenes Teil gefertigt wird, so dass das Federendstück Bestandteil des montierten Zeigerwerks ist, dass das Federendstück in Verbindung mit dem Hebelabschnitt gebracht wird, bevor das andere Ende der Rohrfeder mit dem Federendstück starr verbunden wird, dass das andere Ende der Rohrfeder mit dem Federendstück starr verbunden wird, während dieses an der Platine befestigt ist, und dass nach dem Verbinden der Rohrfeder mit dem Federendstück das Federendstück von der Platine getrennt wird. Durch dieses Vorgehen wird auf einfache Weise ein Messsystem geschaffen, das bereits ohne Justierung eine vergleichsweise hohe Anzeigegenauigkeit hat, wie dies bereits vorstehend im Zusammenhang mit dem Messsystem nach Anspruch 1 des Patentes erläutert wurde.

In vorteilhafter Weiterbildung des erfindungsgemäßen Verfahrens kann vorgesehen sein, dass der Federträger an einer der Platinen des Zeigerwerks angeformt oder befestigt wird, bevor er mit dem einen Ende der Rohrfeder verbunden wird, so dass der Federträger Bestandteil des montierten Zeigerwerks ist, und dass das eine Ende der Rohrfeder in den Federträger eingesetzt ist, während das andere Ende der Rohrfeder mit dem Federendstück starr verbunden wird. In diesem Fall ist durch den Federträger die Lage der Rohrfeder während des Verbindens mit dem Federendstück vorgegeben und fixiert, so dass zu diesem Zweck keine zusätzlichen Fixiervorrichtungen erforderlich sind.

Ferner kann in weiterer vorteilhafter Ausbildung des erfindungsgemäßen Verfahrens vorgesehen sein, dass das Verbinden des einen Endes der Rohrfeder mit dem Federträger und das Verbinden des anderen Endes der Rohrfeder mit dem Federendstück gleichzeitig erfolgen. Bei diesem Vorgehen sind die herkömmlichen Schritte des Verlötens der Rohrfeder mit dem Federträger, des Verlötens der Rohrfeder mit dem Federendstück und des starren Verbindens des Zeigerwerks mit der Rohrfeder zu einem einzigen Herstellungsschritt zusammengefasst.

Weitere vorteilhafte Ausgestaltungen der Erfindung ergeben sich aus der Beschreibung der Ausführungsbeispiele.

Ausführungsbeispiele der Erfindung werden im folgenden anhand der Zeichnungen näher erläutert. Es zeigen:
Fig. 1 eine Seitenansicht eines Ausführungsbeispiels des erfindungsgemäß hergestellten Messsystems, wobei eine Rohrfeder des Messsystems teilweise weggebrochen dargestellt ist;
Fig. 2 eine Vordersicht des Messsystems gemäß Fig. 1 bei Betrachtung in Richtung eines Pfeiles A in Fig. 1;
Fig. 3 eine Ansicht eines Federträgers des Messsystems gemäß den Figuren 1 und 2 bei Betrachtung in Richtung eines Pfeiles B in Fig. 2;
Fig. 4 eine Draufsicht zu Fig. 3;
Fig. 5 eine Schnittdarstellung eines Druckmessgerätes mit dem Messsystem gemäß den Figuren 1 bis 4, wobei das Messsystem in Seitenansicht dargestellt ist und dessen Rohrfeder teilweise weggebrochen dargestellt ist;
Fig. 6 eine ausschnittsweise Schnittdarstellung zur Erläuterung der Befestigung des Messsystems des Druckmessgerätes gemäß Fig. 5 an dessen Gehäuse;
Fig. 7 eine ausschnittsweise Schnittdarstellung zur Erläuterung eines Druckanschlusses des Druckmessgerätes gemäß Fig. 5;
Figuren 8 und 9 den Figuren 3 und 4 entsprechende Darstellungen einer weiteren Ausführungsform des Federträgers;
Fig. 10 eine untere Platine des Messsystems gemäß den Figuren 1 und 2 zu einem Zeitpunkt vor der Montage von dessen Zeigerwerk;
Fig. 11 die untere Platine gemäß Fig. 10 während ihrer Herstellung;
Fig. 12 das Messsystem gemäß den Figuren 1 und 2 während eines Herstellungsschrittes desselben;
Fig. 13 eine obere Platine für eine abgewandelte Ausführungsform des Verfahrens zur Herstellung des Messsystems gemäß den Figuren 1 und 2; und
Fig. 14 eine Figur 12 entsprechende Darstellung eines Messsystems gemäß einem weiteren Ausführungsbeispiel.

In den Figuren sind gleiche bzw. einander entsprechende Elemente jeweils mit demselben Bezugszeichen bezeichnet.

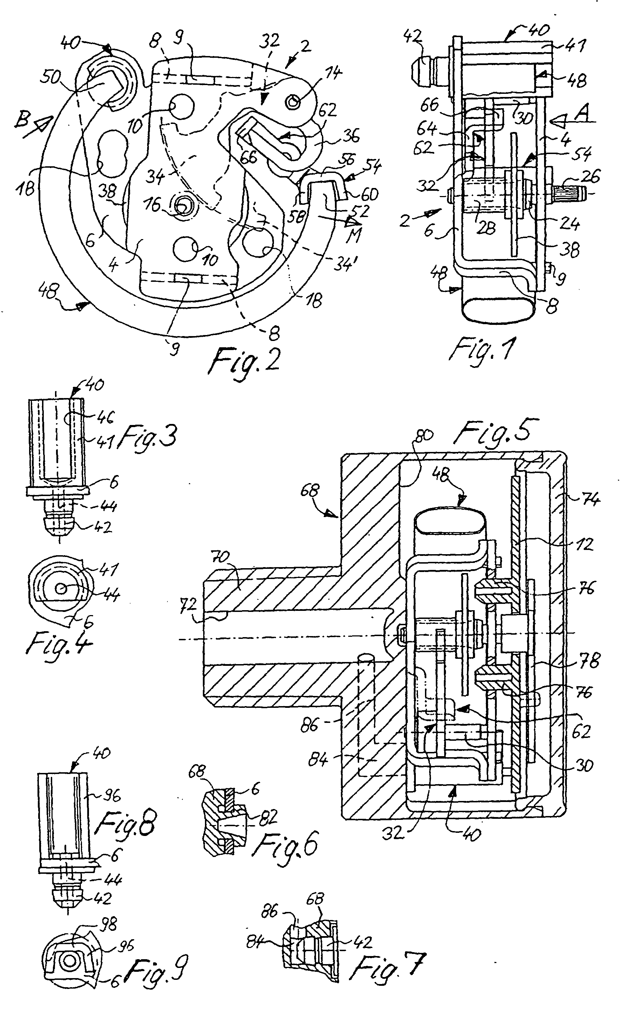

Das in den Figuren 1 bis 4 dargestellte Ausführungsbeispiel eines Messsystems umfasst ein sogenanntes Zeigerwerk 2, das als tragende Elemente eine obere Platine 4 und eine untere Platine 6 aufweist. Wie insbesondere Fig. 1 zeigt, sind die obere Platine 4 und die untere Platine 6 mit Abstand voneinander und parallel zueinander angeordnet. Die obere Platine 4 ist eben, besteht aus einem Metallblech und ist als Stanzteil hergestellt. Die untere Platine 6 weist einen ebenen Hauptabschnitt auf, besteht ebenfalls aus einem Metallblech und ist durch Stanzen und Umbiegen hergestellt. Am ebenen Hauptabschnitt der unteren Platine 6 sind zwei unter ungefähr 90° umgebogene, zur oberen Platine 4 gerichtete Lappen 8 angeformt, an denen die obere Platine 4 anliegt. Jeder Lappen 8 weist einen Ansatz 9 auf, der durch eine entsprechende Öffnung in der oberen Platine 4 ragt und verstemmt ist. Auf diese Weise sind die obere Platine 4 und die unter Platine 6 fest miteinander verbunden.

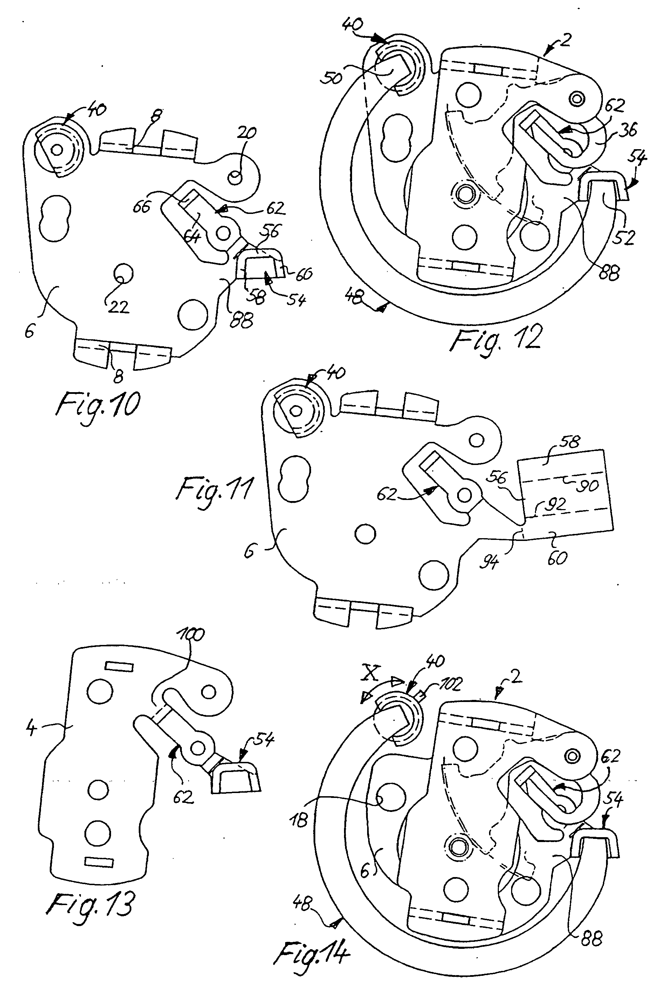

Die obere Platine 4 ist mit zwei Befestigungslöchern 10 versehen, die zur Befestigung eines Zifferblattes 12 an der oberen Platine 4 dienen (siehe Fig. 5). Ferner sind in der oberen Platine 4 ein Lagerloch 14 und ein Lagerloch 16 ausgebildet. In der unteren Platine sind zwei Montagelöcher 18 sowie zwei Lagerlöcher 20 und 22 ausgebildet (siehe Fig. 10).

In dem Lagerloch 16 und dem Lagerloch 22 ist eine Zeigerwelle 24 drehbar gelagert. Die Zeigerwelle 24 weist an ihrem einen Ende einen Zeigerzapfen 26 auf, der in in Fig. 1 gezeigter Weise von der Platine 4 vorsteht. Weil die Platine 4 diejenige ist, von der der Zeigerzapfen 26 vorsteht, wird sie im Rahmen der vorstehenden Beschreibung und Ansprüche als "obere Platine" bezeichnet. Mit der Zeigerwelle 24 fest verbunden ist ein zwischen den beiden Platinen 4 und 6 angeordnetes Ritzel 28.

In den Lagerlöchern 14 und 20 ist eine Welle 30 eines zwischen den beiden Platinen 4 und 6 angeordneten Zahnsegmentes 32 gelagert. Beim dargestellten Ausführungsbeispiel ist das Zahnsegment 32 als zweiarmiger Hebel ausgebildet, dessen einer Arm durch einen verzahnten Abschnitt 34 gebildet ist und dessen anderer Arm durch einen Hebelabschnitt 36 gebildet ist. Der verzahnte Abschnitt 34 und der Hebelabschnitt 36 liegen in einer zu den Ebenen der Platinen 4 und 6 parallelen Ebene. In dieser Ebene ist der Hebelabschnitt 36 U-förmig gekrümmt. Der verzahnte Abschnitt 34 kämmt mit dem Ritzel 28.

Zwischen den beiden Platinen 4 und 6 ist ferner eine als Spiralfeder ausgebildete Vorspannfeder 38 angeordnet, deren eines Ende mit der Zeigerwelle 24 verbunden ist und deren anderes Ende in nicht dargestellter Weise an der unteren Platine 6 festgelegt ist. Die Vorspannfeder 38 übt ein Vorspannmoment im Gegenuhrzeigersinn in Fig. 2 auf das Ritzel 28 aus, das aufgrund des Eingriffs zwischen dem Ritzel 28 und dem verzahnten Abschnitt 34 zu einer elastischen Vorspannkraft am Zahnsegment 32 führt, die dieses im Uhrzeigersinn in Fig. 2 zu drehen versucht.

An der unteren Platine 6 ist ein Federträger 40 in Form einer Hülse 41 befestigt. Am in Fig. 3 unteren Ende der Hülse 41 ist ein Anschlusszapfen 42 mit einer mittigen Bohrung 44 angeformt, die in den Innenraum der Hülse mündet. Die Hülse 41 sitzt auf der in Fig. 2 sichtbaren Vorderseite der unteren Platine 6, und der Anschlusszapfen 42 verläuft durch ein Loch in der unteren Platine 6, so dass er von deren Rückseite vorsteht, wie dies in den Figuren 1 und 3 gezeigt ist. Die den Federträger 40 bildende Hülse 41 ist durch Verstemmen an der unteren Platine befestigt. Die Hülse 41 ist an ihrem in Fig. 3 oberen Ende offen und weist einen in ihrer Längsrichtung verlaufenden Schlitz 46 auf.

Das Messsystem weist zusätzlich zu dem vorstehend erläuterten Zeigerwerk 2 und dem mit dem Zeigerwerk integrierten Federträger 40 eine bogenförmig gekrümmte, metallische Rohrfeder 48 auf. Deren eines Ende 50 erstreckt sich durch den Schlitz 46 in den Innenraum der Hülse 41 und ist mit dem durch die Hülse 41 gebildeten Federträger 40 durch Verlöten starr verbunden. Das Lot ist in Fig. 2 nicht dargestellt. Durch die Bohrung 46 im Anschlusszapfen 42 und den Innenraum der Hülse 41 kann der Messdruck in das Innere der Rohrfeder 48 gelangen. Ansonsten ist die Verbindung zwischen dem einen Ende 50 der Rohrfeder 48 und dem Federträger 40 druckdicht. Auf diese Weise ist das eine Ende 50 der Rohrfeder 48 starr mit dem Zeigerwerk 2 verbunden und in seiner Lage relativ zum Zeigerwerk 2 festgelegt.

Die Rohrfeder 48 erstreckt sich in einem Bogen von ungefähr 270° um das Zeigerwerk 2, wie dies in Fig. 2 gezeigt ist. An ihrem anderen Ende 52 trägt die Rohrfeder 48 ein Federendstück 54, das mit dem anderen Ende 52 dieses dicht schließend durch Verlöten starr verbunden ist, wobei wiederum das Lot in Fig. 2 nicht dargestellt ist. Das Federendstück 54 ist durch ein Teil gebildet, das vor dem Verlöten mit dem Ende 52 an der unteren Platine 6 befestigt war und nach diesem Verlöten von der unteren Platine 6 abgetrennt worden ist, wie dies im folgenden noch näher erläutert werden wird.

Vorstehend ist angegeben, dass das eine Ende 50 der Rohrfeder 48 mit dem Federträger 40 verlötet ist und dass das andere Ende 52 der Rohrfeder 48 mit dem Federendstück 54 verlötet ist. Dabei handelt es sich bei dem Verlöten um die bei dem beschriebenen Ausführungsbeispiel gewählte Art der Herstellung der starren Verbindung der beiden Enden der Rohrfeder 48 mit dem Federträger 40 bzw. dem Federendstück 54. Diese Verbindung ist jedoch nicht notwendigerweise eine Lötverbindung. Vielmehr kommen auch andere Arten der stoffschlüssigen Verbindung, insbesondere eine Schweißverbindung, in Frage. Dies gilt für die gesamte folgende Beschreibung einschließlich der Erläuterung des Verfahrens zur Herstellung des Messsystems. Auch wenn im folgenden der Begriff "Löten" und sinnverwandte Ausdrücke benutzt werden, kommen stets andere Verfahren zur Herstellung einer starren stoffschlüssigen Verbindung in Frage.

Beim dargestellten Ausführungsbeispiel ist das Federehdstück 54 als Kappe ausgebildet, die einen Boden 56 und zwei Seitenwände 58 und 60 aufweist. Der Boden 56 und die beiden Seitenwände 58 und 60 bestehen aus demselben Metallblech wie die untere Platine 6 und sind durch Umbiegen der Seitenwände 58 und 60 sowie des Bodens 56 relativ zueinander zu der Kappe geformt worden. Mit der einen Seitenwand 60 ist einstückig ein L-förmiger Ansatz 62 ausgebildet, dessen von dem Federendstück 54 ausgehender Schenkel 64 parallel zu den Ebenen der beiden Platinen 4 und 6 verläuft. Der andere Schenkel 66 des Ansatzes 62 erstreckt sich im wesentlichen senkrecht zu den Ebenen der beiden Platinen 4 und 6 und bildet einen Anschlag für den U-förmigen Hebelabschnitt 36. Das freie Ende des Hebelabschnitts 36 liegt aufgrund der von der Vorspannfeder 38 ausgeübten Vorspannkraft auf der dem Federendstück 54 zugewandten Seite des Schenkels 66 an.

In den Figuren 1 und 2 ist das Messsystem im drucklosen Zustand dargestellt. Wenn in der Rohrfeder 48 der Messdruck wirkt und höher als der von außen auf die Rohrfeder 48 wirkende Umgebungsdruck ist, wird die Rohrfeder 48 aufgeweitet und wird dadurch deren anderes Ende 52 in Richtung eines Pfeiles M in Fig. 2 ausgelenkt. An dieser Auslenkung nimmt das Federendstück 54 teil, was zur Folge hat, dass der Schenkel 66 das Zahnsegment 32 im Gegenuhrzeigersinn in Fig. 2 schwenkt, so dass die Zeigerwelle 24 entsprechend der Auslenkung gedreht wird. In Fig. 2 ist zusätzlich der verzahnte Abschnitt 34 in seiner dem Nenndruck des Messsystems entsprechenden Endstellung 34' dargestellt.

Fig. 5 zeigt ein Druckmessgerät, bei dem das Messsystem gemäß den Figuren 1 bis 4 angewendet ist. Das Druckmessgerät umfasst ein Gehäuse 68, zu dem ein Geräteanschluss 70 gehört, der als Gewindezapfen ausgebildet ist und mit einem Außengewinde und einem im Gewindezapfen ausgebildeten Sackloch 72 versehen ist. Der Geräteanschluss 70 dient zum Anschließen des Druckmessgerätes an ein System, das den Stoff führt, dessen Druck mittels des Druckmessgerätes gemessen werden soll. Auf der vom Geräteanschluss 70 abgewandten Seite des Gehäuses 68 ist in dieses eine durchsichtige Sichtscheibe 74 eingesetzt. In dem vom Gehäuse 68 und der Sichtscheibe 74 umschlossenen Raum ist das Messsystem derart angeordnet, dass seine obere Platine 4 der Sichtscheibe 74 zugewandt ist. An der oberen Platine 4 des Messsystems ist das Zifferblatt 12 befestigt, wozu zwei am Zifferblatt 12 angeformte Zapfen 76 in die Befestigungslöcher 10 in der oberen Platine 4 eingerastet sind. Auf den Zeigerzapfen 26 ist ein Zeiger 78 gesteckt, dessen Stellung über dem Zifferblatt 12 durch die Sichtscheibe 74 hindurch sichtbar ist, so dass der auf dem Zifferblatt 12 vom Zeiger 78 angezeigte Druckwert abgelesen werden kann.

In Fig. 5 sind das Gehäuse 68, das Zifferblatt 12 und die Sichtscheibe 74 im Schnitt dargestellt, wogegen das Messsystem, das die Ausbildung gemäß den Figuren 1 bis 4 hat, in einer Fig. 1 entsprechenden Seitenansicht gezeigt ist. Dabei ist die Rohrfeder 48 weggebrochen dargestellt. In Fig. 5 sind die das andere Ende 52 der Rohrfeder 48 aufweisende Hälfte der Rohrfeder 48 sowie das Federendstück 54 wegen der abgebrochenen Darstellung der Rohrfeder 48 nicht gezeigt. Mit Strich-Doppelpunkt-Linien ist jedoch der Ansatz 62, der sich vor der Zeichenebene von Fig. 5 befindet, eingezeichnet. Wie in Fig. 5 erkennbar ist, ist das Messsystem 2 in Fig. 5 in einer Position dargestellt, die sich durch Drehung des Messsystems aus der in Fig. 1 gezeigten Stellung um ungefähr 180° um die Achse der Zeigerwelle 24 ergibt.

An der Innenwand 80 des Gehäuses 68 sind an den Befestigungslöchern 10 in der unteren Platine 6 entsprechenden Stellen Vorsprünge 82 angeformt. Diese sind in Fig. 5 nicht dargestellt. Einer dieser Vorsprünge 82 ist jedoch in Fig. 6 gezeigt. Um das Messsystem am Gehäuse 68 zu befestigen, wird die untere Platine 6 derart an die Innenwand 80 angesetzt, dass die Vorsprünge 82 durch die Befestigungslöcher 10 treten. Danach werden die Vorsprünge 82 derart aufgeweitet und abgeflacht, dass sie die in Fig. 6 gezeigte Form annehmen. Auf diese Weise ist die untere Platine 6 am Gehäuse 68 angenietet und dadurch das gesamte Messsystem am Gehäuse befestigt.

Im Gehäuse 68 ist eine Bohrung 84 ausgebildet, die an ihrem einen Ende durch einen Kanal 86 mit dem Sackloch 72 in Verbindung steht und an ihrem anderen Ende in der Innenwand 80 mündet. Die Bohrung 84 ist derart dimensioniert und positioniert, dass sie den Anschlusszapfen 42 abgedichtet aufnimmt, wenn das Messsystem in vorstehend beschriebener Weise am Gehäuse 68 befestigt ist. Der auf diese Weise hergestellte Druckanschluss zwischen dem Messsystem und dem Gehäuse ist in Fig. 7 gezeigt. In Fig. 5 ist zwar die Bohrung 84 gezeigt, nicht jedoch der in diese eingesetzte Anschlusszapfen 42.

Im Betrieb gelangt der Messdruck durch das Sackloch 72, den Kanal 86, die Bohrung 84, die Bohrung 44 im Anschlusszapfen 42 und den Federträger 40 in die Rohrfeder 48. Deren anderes Ende 52 und das Federendstück 54 werden in Abhängigkeit vom Messdruck ausgelenkt, wobei diese Auslenkung mittels des Zahnsegmentes 32 und des Ritzels 28 zum Zeiger 78 übertragen wird.

Aus der vorstehenden Beschreibung ergibt sich, dass der Anschlusszapfen 42 des Messsystems nicht zugleich den Geräteanschluss des Druckmessgerätes bildet, sondern dass vielmehr der Geräteanschluss 72 und der Anschlusszapfen 42 zwei verschiedene Elemente sind. Dies ermöglicht es, das gleiche Messsystem in Druckmessgeräte einzubauen, die sich durch ihren Geräteanschluss unterscheiden. Beispielsweise kann das in Fig. 5 dargestellte Druckmessgerät dadurch abgewandelt sein, dass der rückseitige Geräteanschluss 70 durch einen sogenannten radialen Geräteanschluss ersetzt ist, der durch einen radial, beispielsweise nach unten in Fig. 5, vom Gehäuse 68 vorstehenden Gewindezapfen ersetzt ist. In diesem Fall müßte lediglich der Kanal 86 einen anderen als den dargestellten Verlauf haben. Das Messsystem einschließlich seines Anschlusszapfens 42 braucht in diesem Fall nicht abgewandelt zu werden, sondern kann die anhand der Figuren 1 bis 4 beschriebene Ausbildung behalten.

Im folgenden werden unter Bezugnahme auf die Figuren 10 bis 12 einzelne Schritte des Verfahrens zur Herstellung des Messsystems gemäß den Figuren 1 bis 4 erläutert.

Fig. 10 zeigt die untere Platine 6 des Messsystems in einer Fig. 2 ähnlichen Darstellung in demjenigen Zustand, in dem sie mit den übrigen Elementen des Zeigerwerks zum Zeigerwerk 2 zusammengebaut wird. Die beiden Lappen 8 sind bereits umgebogen, und der Federträger 40 ist in bereits vorstehend erläuterter Weise an der unteren Platine 6 befestigt worden.

Wie Fig. 10 zeigt, ist an der unteren Platine 6 ein Steg 88 angeformt, der übergeht in den Ansatz 62, der wiederum übergeht und einstückig ausgebildet ist mit dem Federendstück 54. Das Federendstück 54 und der Ansatz 62 sind somit in dem in Fig. 10 gezeigten Zustand fest mit der unteren Platine 6 verbunden. Dabei haben das Federendstück 54 und der Ansatz 62 jeweils ihre endgültige Gestalt, die sie als Bestandteil des fertigen Messsystems gemäß den Figuren 1 bis 4 haben sollen. Ferner werden das Federendstück 54 und der Ansatz 62 mittels des Stegs 88 an der unteren Platine 68 relativ zu den übrigen Elementen der unteren Platine 6, insbesondere zu dem Lagerloch 20 für die Welle 30 des Zahnsegmentes 32, in denjenigen Relativstellungen gehalten, die für das fertige Messsystem als Sollstellungen bei druckloser Rohrfeder vorgegeben sind.

Die den Ansatz 62 und das Federendstück 54 bildenden Elemente werden zusammen mit den übrigen Elementen der unteren Platine 6 aus einem ebenen Metallblech gestanzt und dann in die gewünschte Gestalt gebogen. Dies ist im Hinblick auf das Federendstück 54 in Fig. 11 gezeigt, die die untere Platine 6 in einem Zustand zeigt, der sich von dem Zustand gemäß Fig. 10 allein dadurch unterscheidet, dass die das Federendstück bildenden Elemente noch nicht gebogen worden sind. Im Zustand gemäß Fig. 11 liegen der Boden 56 und die beiden Seitenwände 58 und 60 des Federendstücks noch flach in der Ebene des Hauptabschnitts der unteren Platine 6. In dieser Lage sind der Boden 56 und die beiden Seitenwände 58 und 60 zusammen mit den übrigen Elementen der unteren Platine 6 gestanzt worden. Um das Federendstück 54 zu formen, wird, von dem in Fig. 11 gezeigten Zustand ausgehend, die Seitenwand 58 um eine Biegelinie 90 gebogen, wird der Boden 56 um eine Biegelinie 92 gebogen und wird die Seitenwand 60 um eine Biegelinie 94 gebogen, so dass sich die in den Figuren 10 und 2 gezeigte Gestalt des Federendstücks 54 ergibt.

Die untere Platine 6 wird in ihrem in Fig. 10 gezeigten Zustand mit der das Ritzel 28 tragenden Zeigerwelle 24, der das Zahnsegment 32 tragenden Welle 30, der Vorspannfeder 38 und der oberen Platine 4 zu dem Zeigerwerk 2 zusammengebaut bzw. montiert. Dabei sind zu diesem Zeitpunkt das Federendstück 54 und der Ansatz 62 aufgrund ihrer Befestigung an der unteren Platine 6 Bestandteile des Zeigerwerks. Nach der Montage des Zeigerwerks 2 wird die Rohrfeder 48 mit ihrem einen Ende 50 in den Federträger 40 eingesetzt und mit ihrem anderen Ende 52 in das Federendstück 54 eingesetzt. Dadurch ergibt sich die in Fig. 12 gezeigte Anordnung aus der Rohrfeder 48 und den Zeigerwerk 2, an dem zu diesem Zeitpunkt noch das Federendstück 54 und der Ansatz 62 mittels des Steges 88 befestigt sind. Während die Rohrfeder 48 relativ zum Zeigerwerk 2 ihre in Fig. 12 gezeigte Stellung einnimmt und weder durch eine Druckdifferenz zwischen ihrem Inneren und ihrer Umgebung noch durch andere Kräfte verformt ist, wird das eine Ende 50 mit dem Federträger 40 verlötet und wird das andere Ende 52 mit dem Federendstück 54 verlötet. Diese beiden Lötungen werden vorzugsweise gleichzeitig durchgeführt. Da sich dabei die Relativstellung zwischen dem Federendstück 54 und der unteren Platine 68 nicht ändert, nimmt das Federendstück 54 auch im an die Rohrfeder 48 angelöteten Zustand nach wie vor genau seine Sollstellung ein.

Im Anschluss an das Löten werden das Federendstück 54 und der Ansatz 62 von der unteren Platine 6 dadurch getrennt, dass der Steg 88 entfernt wird. Dies kann beispielsweise durch Stanzen oder Laserschneiden erfolgen. Dadurch entsteht das fertige, anhand der Figuren 1 bis 4 bereits vorstehend erläuterte Messsystem. Durch das Entfernen des Steges 88 ändern sich die Lagen des Federendstücks 54 und des Ansatzes 62 relativ zu den Elementen des Zeigerwerks 2 nicht, da das Entfernen des Steges 88 keinen Einfluss auf die Gestalt der Rohrfeder 48 hat, die somit vor und nach dem Entfernen des Steges 88 dieselbe Gestalt hat. Dies bedeutet, dass das Federendstück 54 am fertigen Messsystem seine Sollstellung mit derselben hohen Genauigkeit einnimmt, die bei der Fertigung der unteren Platine 6 mit dem daran angeformten Federendstück 54 (siehe Fig. 10) erreicht wird.

Bei dem auf vorstehend beschriebene Weise hergestellten Messsystem ist somit dafür gesorgt, dass das Federendstück 54 seine Sollstellung bezüglich des Zeigerwerks einnimmt, ohne dass hierzu eine Justierung notwendig ist. Dadurch ist die Anzeigegenauigkeit des mit dem Messsystem ausgerüsteten Messgerätes erhöht. Wenn zur weiteren Erhöhung der Anzeigegenauigkeit dennoch eine Justierung durchgeführt wird, so ist der hierzu erforderliche Aufwand bei dem erfindungsgemäß hergestellten Messsystem geringer als bei den herkömmlichen Messsystemen der in der Einleitung beschriebenen Art.

Bei dem vorstehend beschriebenen Verfahren zur Herstellung des Messsystems sind die Schritte des Verlötens des einen Endes der Rohrfeder mit dem Federträger, des Verlötens des anderen Endes der Rohrfeder mit dem Federendstück und des starren Verbindens des einen Endes der Rohrfeder mit dem Zeigerwerk zu einem einzigen Herstellungsschritt zusammengefasst. Dadurch ist das Herstellungsverfahren vereinfacht.

Die Figuren 8 und 9 zeigen in den Figuren 3 und 4 ähnlichen Darstellungen eine weitere Ausführungsform des Federträgers 40. Gemäß den Figuren 8 und 9 ist der Federträger 40 nicht als Hülse ausgebildet sondern als eine aus dem Metallblech der unteren Platine 6 gebogene Kappe 96, die einstückig mit der unteren Platine 6 ausgebildet ist und einen in der Draufsicht gemäß Fig. 9 U-förmigen Querschnitt hat. Der Federträger 40 in Form der Kappe 96 kann auf ähnliche Weise, wie dies für das Federendstück 54 anhand der Figuren 10 und 11 erläutert worden ist, durch Biegen von Elementen des Stanzteils für die untere Platine hergestellt werden. Wie in Fig. 8 erkennbar ist, steht die Kappe 96 von der Vorderseite der unteren Platine 6 vor, während auf der Rückseite der unteren Platine 6 von dieser der Anschlusszapfen 42 mit der Bohrung 44 vorsteht. Bei der Ausführungsform gemäß den Figuren 8 und 9 ist der Anschlusszapfen 42 nicht am Federträger angeformt sondern ein davon getrennt gefertigtes Teil, das in ein Loch in der unteren Platine 6 eingesetzt und durch Verstemmen an der unteren Platine 6 befestigt ist.

Abweichend von der anhand der Figuren 8 und 9 erläuterten Ausführungsform des Federträgers 40 kann der Anschlusszapfen 42 statt auf der Rückseite der unteren Platine 6 am Boden 98 der Kappe 96 befestigt sein. Sinngemäß gleiches gilt für die Ausführungsform des Federträgers 40 gemäß den Figuren 3 und 4, bei der der Anschlusszapfen 42 statt als axiale Verlängerung der Hülse 41 als seitlicher, radial von der Hülse 41 vorstehender Ansatz ausgebildet sein kann. Diese Abwandlungen der Ausführungsformen gemäß den Figuren 3 und 4 sowie 8 und 9 sind dann vorteilhaft, wenn das Messsystem überwiegend bei Druckmessgeräten zur Anwendung kommt, die einen sogenannten radialen Geräteanschluss aufweisen.

Die anhand der Fig. 3, 4, 8 und 9 beschriebenen Ausführungsformen des Federträgers 40 einschließlich ihrer Abwandlungen zeichnen sich durch einfache Fertigung und geringe Abmessungen aus, so dass sie es erleichtern, das Messsystem kompakt auszubilden. Daher können die beschriebenen Ausführungsformen des Federträgers einschließlich ihrer Abwandlungen auch mit Vorteil bei Messsystemen angewendet werden, bei dem das Federendstück vor dem Verlöten mit der Rohrfeder nicht an einer der beiden Platinen befestigt ist.

Bei dem vorstehend beschriebenen Ausführungsbeispiel des Messsystems liegt der Hebelabschnitt 36 des Zahnsegmentes 32 unmittelbar an dem Schenkel 66 des starr mit dem Federendstück 54 verbundenen Ansatzes 62 an. Es entfällt somit die sonst übliche Zugstange, so dass der Herstellungsaufwand, der Montageaufwand und der Raumbedarf für die sonst übliche Zugstange entfallen. Diese zugstangenlose Verbindung zwischen dem Federendstück und dem Zahnsegment kann vorteilhaft auch bei Messsystemen angewendet werden, bei denen das Federendstück vor dem Verlöten mit der Rohrfeder nicht an einer der beiden Platinen befestigt ist.

Obwohl bei dem bevorzugten, vorstehend anhand der Figuren 1 bis 4 erläuterten Ausführungsbeispiel des Messsystems die Verbindung zwischen dem Zahnsegment und dem Federendstück ohne eine Zugstange realisiert ist, kann in Abwandlung des bevorzugten Ausführungsbeispiels eine solche Zugstange vorgesehen sein. In diesem Fall entfällt der L-förmige Ansatz 62 und ist er durch die Zugstange ersetzt. Beibehalten bleibt bei dieser Abwandlung, dass das Federendstück durch ein Teil gebildet ist, das zunächst an einer der Platinen des Zeigerwerks befestigt ist und erst nach dem Verlöten des anderen Endes der Rohrfeder mit dem Federendstück abgetrennt worden ist.

Bei dem vorstehend beschriebenen Ausführungsbeispiel des Messsystems und des Verfahrens zu seiner Herstellung sind das Federendstück 54 und der Ansatz 62 zunächst mit der unteren Platine 6 verbunden. Alternativ können sie auch zunächst mit der oberen Platine 4 verbunden sein, wie dies in Fig. 13 gezeigt ist. Fig. 13 zeigt die obere Platine 4, das Federendstück 54 und den Ansatz 62 des Messsystems gemäß den Figuren 1 bis 4, während der Ansatz 62 noch mit der oberen Platine 4 mittels eines Steges verbunden ist. Der Ansatz 62 und das Federendstück 54 werden in sinngemäß gleicher Weise an der oberen Platine 4 angeformt, wie dies anhand der Figuren 10 und 11 für das Anformen an der unteren Platine 6 erläutert worden ist. Das Zeigerwerk wird aus der oberen Platine 4 in ihrem Zustand gemäß Fig. 13 und den übrigen beschriebenen Elementen des Zeigerwerkes montiert, wobei in diesem Fall die untere Platine 6 die Gestalt gemäß Fig. 2 hat und nicht mit dem Federendstück 54 und dem Ansatz 62 versehen ist. Mit diesem montierten Federwerk wird dann die Rohrfeder 48 in gleicher Weise verlötet, wie dies im Zusammenhang mit Fig. 12 erläutert worden ist. Abschließend wird dann der Steg 100 entfernt, um den Ansatz 62 und das Federendstück 54 von der oberen Platine 4 zu trennen. Das auf diese Weise gefertigte Messsystem hat die Ausbildung gemäß den Figuren 1 bis 4, und dieses Messsystem sowie das Verfahren zu seiner Herstellung weisen die gleichen Vorteile auf, wie sie vorstehend im Anschluss an die Erläuterung der Fig. 12 angegeben sind.

Bei dem anhand der Figuren 1 bis 4 erläuterten Ausführungsbeispiel des Messsystems ist der Federträger 40 an einer der beiden Platinen, nämlich der unteren Platine 6, befestigt. Gemäß einem weiteren Ausführungsbeispiel des Messsystems ist diese Befestigung des Federträgers an einer der beiden Platinen nicht vorgesehen. Fig. 14 zeigt dieses weitere Ausführungsbeispiel in einer Fig. 12 ähnlichen Darstellung während seiner Herstellung.

Die einzigen Unterschiede zwischen den Figuren 12 und 14 bestehen darin, dass gemäß Fig. 14 der Federträger 40 an keiner der beiden Platinen 4 und 6 befestigt ist, dass die untere Platine 6 im Bereich des Federträgers 40 eine Aussparung aufweist und dass das dem Federträger 40 benachbarte Montageloch 18 kreisrund ist. Während des Verlötens der Rohrfeder 48 mit dem Federendstück 54 und dem Federtäger 40 nehmen das Zeigerwerk 2, die Rohrfeder 48 und das Federendstück 54 die in Fig. 14 gezeigten Relativstellungen ein, in denen sie mittels einer nicht dargestellten Lötvorrichtung gehalten werden. Dabei muss die Relativstellung zwischen dem Zeigerwerk 2 und dem Federträger 40 übereinstimmen mit der Relativstellung, die der Federträger 40 und das Zeigerwerk 2 im Druckmessgerät einnehmen. Dies gilt auch für die durch einen Doppelpfeil X in Fig. 14 angedeutete Drehstellung des Federträgers 40, der, um die Reproduzierung seiner Drehstellung zu gewährleisten, mit einem radialen Vorsprung 102 versehen sein kann, der in der Lötvorrichtung in eine entsprechende Ausnehmung eingreift und der, wenn der Anschlusszapfen am Federträger 40 in die Bohrung 84 des Gehäuses 68 eingesetzt ist, in eine Ausnehmung des Gehäuses eingreift.

Während das Zeigerwerk 2, der Federträger 40 und die Rohrfeder 48 in vorstehend beschriebener Weise in der Lötvorrichtung fixiert sind, wird das eine Ende 50 der Rohrfeder 48 mit dem Federträger 40 verlötet und wird das andere Ende 52 der Rohrfeder 48 mit dem Federendstück 54 verlötet. Im Anschluss daran wird der Steg 88 entfernt, so dass dadurch das Federendstück 54 und der Ansatz 62 von der unteren Platine 6 getrennt werden. Da dann weder der Federträger 40, noch das Federendstück 54 mit dem Zeigerwerk 2 verbunden sind, nimmt das Federendstück 54 vorübergehend nicht seine Sollstellung bezüglich des Zeigerwerks 2 ein. Sobald jedoch das Zeigerwerk 2 und die Rohrfeder 48 im Gehäuse 68 des Druckmessgerätes montiert worden sind, nehmen das Federendstück 54 und der Ansatz 62 ihre Sollstellungen bezüglich des Zeigerwerks 2 ein, weil der Federträger dann vom Gehäuse 68 in der vorgegebenen Relativstellung - einschließlich der Drehstellung des Federträgers 40 - bezüglich des Zeigerwerks 2 gehalten wird.

Bei dem anhand der Figuren 1 bis 4, 8 und 9 erläuterten Ausführungsbeispiel des Messsystems ist der Federträger 40 mit der unteren Platine 6 verstemmt oder einstückig an dieser angeformt, wobei die Verbindung des Federträgers 40 mit der unteren Platine 46 hergestellt wird, bevor das Zeigerwerk montiert wird. Die Ausbildung des Federendstücks als ein Teil, das vor dem Verlöten der Rohrfeder mit dem Federendstück an einer der beiden Platinen befestigt ist und nach dem Verlöten der Rohrfeder mit dem Federendstück von dieser Platine abgetrennt wird, kann darüber hinaus auch angewendet werden bei einem Messsystem, das einen herkömmlichen, mit einem angeformten Geräteanschluss versehenen Federträger aufweist, mit dem das Zeigerwerk verschraubt ist. In diesem Fall wird das montierte Zeigerwerk, an dessen einer Platine das Federendstück befestigt ist, am Federträger angeschraubt, wonach dann die Rohrfeder mit ihren Enden in den Federträger und das Federendstück eingesetzt wird. Nach dem Verlöten der beiden Enden der Rohrfeder mit dem Federträger und dem Federendstück erfolgt die Trennung des Federendstücks vom Zeigerwerk.

Ein Messsystem für ein Druckmessgerät umfasst ein Zeigerwerk mit zwei Platinen, in denen eine ein Ritzel tragende Zeigerwelle sowie ein Zahnsegment drehbar gelagert sind. Ferner umfasst das Messsystem eine bogenförmig gekrümmte, metallische Rohrfeder, die einerseits mit einem Federträger und andererseits mit einem Federendstück verlötet ist. Das Federendstück ist mit dem Zahnsegment derart verbunden, dass die Auslenkung des Federendstücks aufgrund des Messdrucks zum Zahnsegment übertragen wird. Das Federendstück ist durch ein vor dem Verlöten der Rohrfeder mit dem Federendstück an einer der beiden Platinen starr befestigtes und nach dem Verlöten der Rohrfeder mit dem Federendstück von dieser Platine abgetrenntes Teil gebildet. Im Zuge der Herstellung des Messsystems wird das Federendstück als ein mit einer der beiden Platinen fest verbundenes Teil gefertigt. Die Rohrfeder wird mit dem Federendstück verlötet, während dieses noch starr an der Platine befestigt ist. Erst danach wird das Federendstück von der Platine getrennt. Vorzugsweise ist der Federträger an einer der beiden Platinen angeformt oder befestigt. Das Federendstück nimmt mit hoher Genauigkeit seine Sollstellung bezüglich des Zeigerwerks ein.

## Patentansprüche

1. Verfahren zur Herstellung eines Messsystems für ein Druckmessgerät, wobei das Messsystem ein Zeigerwerk (2) und eine bogenförmig gekrümmte, metallische Rohrfeder (48) aufweist, wobei das Zeigerwerk (2) eine obere Platine (4) und eine untere Platine (6), die im wesentlichen parallel zueinander und mit Abstand voneinander angeordnet sind und miteinander verbunden sind, sowie eine ein Ritzel (28) tragende Zeigerwelle (24) und ein Zahnsegment (32) mit einem Hebelabschnitt (36) sowie einem verzahnten Abschnitt (34) aufweist, der mit dem Ritzel (28) kämmt, wobei die Zeigerwelle (24) und das Zahnsegment (32) drehbar in und zwischen den zwei Platinen (4, 6) gelagert sind und wobei die Zeigerwelle (24) einen von der oberen Platine (4) vorstehenden Zeigerzapfen (26) aufweist, wobei die Rohrfeder (48) an ihrem einen Ende (50) mit einem metallischen Federträger (40) verbunden ist, durch den hindurch der Messdruck in das Innere der Rohrfeder (48) gelangen kann, und an ihrem anderen Ende (52) ein metallisches Federendstück (54) trägt, das in Abhängigkeit von dem an die Rohrfeder (48) angelegten Messdruck ausgelenkt wird, und wobei das Federendstück (54) mit dem Hebelabschnitt (36) des Zahnsegments (32) derart verbunden ist, dass die Auslenkung des Federendstücks (54) zum Hebelabschnitt (36) übertragen wird, wobei das Verfahren die Schritte umfasst, dass das Zeigerwerk (2) montiert wird, dass das eine Ende (50) der Rohrfeder (48) mit dem Federträger (40) verbunden wird, dass das andere Ende (52) der Rohrfeder (48) mit dem Federendstück (54) starr verbunden wird, und dass das Federendstück (54) in Verbindung mit dem Hebelabschnitt (36) des Zahnsegments (32) gebracht wird,
**dadurch gekennzeichnet,**
**dass** das Federendstück (54) als mit einer der beiden Platinen (4, 6) fest verbundenes Teil gefertigt wird, so dass das Federendstück (54) Bestandteil des montierten Zeigerwerks (2) ist, dass das Federendstück (54) in Verbindung mit dem Hebelabschnitt (36) gebracht wird, bevor das andere Ende (52) der Rohrfeder (48) mit dem Federendstück (54) starr verbunden wird, dass das andere Ende (52) der Rohrfeder (48) mit dem Federendstück (54) starr verbunden wird, während diese an der Platine (4, 6) befestigt ist, und dass nach dem Verbinden der Rohrfeder (48) mit dem Federendstück (54) das Federendstück (54) von der Platine (4, 6) getrennt wird.

2. Verfahren nach Anspruch 1, **dadurch gekennzeichnet, dass** der Federträger (40) an einer der Platinen (4, 6) des Zeigerwerks (2) angeformt oder befestigt wird, bevor er mit dem einen Ende (50) der Rohrfeder (48) verbunden wird, so dass der Federträger (40) Bestandteil des montierten Zeigerwerks (2) ist, und dass das eine Ende (50) der Rohrfeder (48) in den Federträger (40) eingesetzt ist, während das andere Ende (52) der Rohrfeder (48) mit dem Federendstück (54) starr verbunden wird.

3. Verfahren nach Anspruch 2, **dadurch gekennzeichnet, dass** das Verbinden des einen Endes (50) der Rohrfeder (48) mit dem Federträger (40) und das Verbinden des anderen Endes (52) der Rohrfeder (48) mit dem Federendstück (54) gleichzeitig erfolgen.

4. Verfahren nach einem der Ansprüche 1 bis 3, **dadurch gekennzeichnet, dass** das andere Ende (52) der Rohrfeder (48) mit dem Federendstück (54) verlötet wird.

## Claims

1. Method of manufacturing a gauging system for a pressure gauge, wherein the gauging system has a dial train (2) and an arcuate metal tube spring (48), wherein the dial train (2) has a top plate (4) and bottom plate (6) that are arranged essentially parallel with each other and spaced apart from each other and are connected to each other, a pointer shaft (24) that carries a pinion (28), and a toothed segment (32) with a lever portion (36) and a toothed portion (34) that meshes with the pinion (28), wherein the pointer shaft (24) and the toothed segment (32) are rotatably mounted in and between the two plates (4, 6) and wherein the pointer shaft (24) has a pointer stub (26) projecting from the top plate (4), wherein the tube spring (48) is connected by one end (50) to a metal spring carrier (40) through which the measured pressure can pass into the interior of the tube spring (48), and carries at its other end (52) a metal spring end piece (54) which is deflected as a function of the measured pressure admitted to the tube spring (48), and wherein the spring end piece (54) is connected to the lever portion (36) of the tooth segment (32) so that the deflection of the spring end piece (54) is transmitted to the lever portion (36), the method comprising the following steps: the dial train (2) is installed, one end (50) of the tube spring (48) is connected to the spring carrier (40), the other end (52) of the tube spring (48) is rigidly connected to the spring end piece (54), and a connection is made between the spring end piece (54) and the lever portion (36) of the tooth segment (32),
**characterized in that**
the spring end piece (54) is made as a part permanently joined to one of the two plates (4, 6) so that the spring end piece (54) is a component part of the installed dial train (2), **in that** the connection is made between the spring end piece (54) and the lever portion (36) before the other end (52) of the tube spring (48) is rigidly connected to the spring end piece (54), **in that** the other end (52) of the tube spring (48) is rigidly connected to the spring end piece (54) while the latter is attached to the plate (4, 6), and **in that** after the tube spring (48) is connected to the spring end piece (54), the spring end piece (54) is parted from the plate (4, 6).

2. Method according to Claim 1, **characterized in that** the spring carrier (40) is formed on, or attached to, one of the plates (4, 6) of the dial train (2) before it is connected to one end (50) of the tube spring (48) so that the spring carrier (40) is a component part of the installed dial train (2), and **in that** one end (50) of the tube spring (48) is inserted into the spring carrier (40) while the other end (52) of the tube spring (48) is being rigidly connected to the spring end piece (54).

3. Method according to Claim 2, **characterized in that** the connection of one end (50) of the tube spring (48) to the spring carrier (40) and the connection of the other end (52) of the tube spring (48) to the spring end piece (54) are made simultaneously.

4. Method according to any one of Claims 1 to 3, **characterized in that** the other end (52) of the tube spring (48) is soldered to the spring end piece (54).

## Revendications

1. Procédé de fabrication d'un système de mesure pour un capteur de pression, le système de mesure comportant un mécanisme à aiguilles (2) et un ressort tubulaire (48) métallique, courbé en arc, le mécanisme à aiguilles (2) comportant une platine supérieure (4) et une platine inférieure (6) qui sont disposées sensiblement parallèlement l'une à l'autre et à distance l'une de l'autre et sont reliées entre elles, ainsi qu'un arbre d'aiguille (24) portant un pignon (28) et un segment denté (32) avec une partie à levier (36) ainsi qu'une partie dentée (34) qui engrène avec le pignon (28), l'arbre d'aiguille (24) et le segment denté (32) étant montés tournants dans et entre les deux platines (4, 6), et l'arbre d'aiguille (24) comportant un tourillon d'aiguille (26) dépassant de la platine supérieure (4), le ressort tubulaire (48) étant relié par l'une de ses extrémités (50) à un support de ressort (40) métallique à travers lequel la pression de mesure peut parvenir à l'intérieur du ressort tubulaire, et qui, à son autre extrémité (52), porte un embout de ressort (54) métallique qui est dévié en fonction de la pression de mesure appliquée au ressort tubulaire (48), et l'embout de ressort (54) étant relié à la partie à levier (36) du segment denté (32) de manière que la déviation de l'embout de ressort (54) soit transmise à la partie à levier (36), le procédé comprenant les étapes suivant lesquelles le mécanisme à aiguilles (2) est monté, une extrémité (50) du ressort tubulaire (48) est reliée au support de ressort (40), l'autre extrémité (52) du ressort tubulaire (48) est reliée rigidement à l'embout de ressort (54), et l'embout de ressort (54) est amené en liaison avec la partie à levier (36) du segment denté (32), **caractérisé en ce que** l'embout de ressort (54) est fabriqué en tant que pièce solidaire de l'une des deux platines (4, 6), de manière que l'embout de ressort (54) fasse partie intégrante du mécanisme à aiguilles (2) monté, **en ce que** l'embout de ressort (54) est amené en liaison avec la partie à levier (36) avant que l'autre extrémité (52) du ressort tubulaire (48) ne soit reliée rigidement à l'embout de ressort (54), **en ce que** l'autre extrémité (52) du ressort tubulaire (48) est reliée rigidement à l'embout de ressort (54), tandis que ledit ressort tubulaire est fixé à la platine (4, 6), et **en ce qu'**après liaison du ressort tubulaire (48) et de l'embout de ressort (54), l'embout de ressort (54) est séparé de la platine (4, 6).

2. Procédé selon la revendication 1, **caractérisé en ce que** le support de ressort (40) est formé ou fixé sur l'une des platines (4, 6) du mécanisme à aiguilles (2) avant d'être relié à une extrémité (50) du ressort tubulaire, ce qui fait que le support de ressort (40) fait partie intégrante du mécanisme à aiguilles (2) monté, et **en ce qu'**une extrémité (50) du ressort tubulaire (48) est insérée dans le support de ressort (40) tandis que l'autre extrémité (52) du ressort tubulaire (48) est reliée rigidement à l'embout de ressort (54).

3. Procédé selon la revendication 2, **caractérisé en ce que** la liaison d'une extrémité (50) du ressort tubulaire (48) avec le support de ressort (40) et la liaison de l'autre extrémité (52) du ressort tubulaire (48) avec l'embout de ressort (54) s'effectuent simultanément.

4. Procédé selon l'une des revendications 1 à 3, **caractérisé en ce que** l'autre extrémité (52) du ressort tubulaire (48) est brasée avec l'embout de ressort (54).
